(19) Europäisches Patentamt / European Patent Office / Office européen des brevets

(11) **EP 1 253 030 B1**

(12) **EUROPÄISCHE PATENTSCHRIFT**

(45) Veröffentlichungstag und Bekanntmachung des Hinweises auf die Patenterteilung:
**30.12.2009 Patentblatt 2009/53**

(51) Int Cl.:
***B60G 17/015*** *(2006.01)*      ***B60G 17/08*** *(2006.01)*
***F16F 9/46*** *(2006.01)*

(21) Anmeldenummer: **02005720.4**

(22) Anmeldetag: **13.03.2002**

(54) **Elektrisch verstellbare, semiaktive Dämpferregelung**

Electrically adjustable, semiactive damper control

Réglage semi-actif d'un amortisseur ajustable électriquement

(84) Benannte Vertragsstaaten:
**DE ES FR GB IT SE**

(30) Priorität: **27.04.2001 DE 10120918**

(43) Veröffentlichungstag der Anmeldung:
**30.10.2002 Patentblatt 2002/44**

(73) Patentinhaber:
- **Continental Aktiengesellschaft**
  **30165 Hannover (DE)**
- **ZF Sachs AG**
  **97424 Schweinfurt (DE)**

(72) Erfinder:
- **Stiller, Alexander, Dr.**
  **30826 Garbsen (DE)**
- **Sommer, Stefan, Dr.**
  **30827 Garbsen (DE)**
- **Grotendorst, Jörg**
  **30823 Garbsen (DE)**
- **Maurischat, Christian, Dipl.-Ing.**
  **97502 Euerbach (DE)**
- **Hees, Eberhard**
  **97505 Goschsheim (DE)**
- **Kutsche, Thomas**
  **97422 Schweinfurt (DE)**
- **Schumacher, Wolfgang**
  **97493 Begrheinfeld (DE)**

(74) Vertreter: **Finger, Karsten**
**Continental Aktiengesellschaft,**
**Vahrenwalder Str. 9**
**30165 Hannover (DE)**

(56) Entgegenhaltungen:
**EP-A1- 0 518 056    DE-A1- 4 135 526**
**DE-A1- 4 212 852**

**Beschreibung**

Die Erfindung betrifft ein Verfahren und eine Vorrichtung zur Steuerung oder Regelung der Dämpfkraft für einen oder mehrere Schwingungsdämpfer einer Fahrzeugradaufhängung, gemäß den Oberbegriffen der Ansprüche 1 und 11. Ein solches Verfahren bzw. eine solche Vorrichtung sind aus der gattungsgemäßen DE 4 135 526 A bekannt.

Aus Gründen der Fahrsicherheit ist es wünschenswert, die elektrische Regelung eines Fahrzeug-Dämpfers so vorzunehmen, dass die Fahrsicherheit auch bei einem Ausfall der Dämpfer-Regelung wegen eines Defekts in der Regeleinrichtung oder bei Stromausfall gewährleistet bleibt. Da die größere Fahrsicherheit eher mit einer härteren als mit einer weicheren Dämpfung gegeben ist, sollte die Regelung grundsätzlich so ausgelegt sein, dass bei einem Ausfall der Regelung die härtere Dämpfercharakteristik zur Wirkung gelangt, während die Dämpfung mittels der elektrischen Regelung weicher und damit komfortabler reagiert.

Es ist bekannt, semiaktive Dämpfer nach dem Skyhook-Verfahren zu regeln. Im Skyhook-Verfahren wird eine Solldämpfkraft berechnet, die proportional der Aufbaugeschwindigkeit ist. Aus der Solldämpfkraft und der ermittelten Dämpfergeschwindigkeit wird bei elektrisch verstellbaren Dämpfern im allgemeinen mit einem inversen Dämpferkennfeld ein Sollstrom berechnet, mit dem ein elektrisches Ventil die Dämpfkraft im Dämpfer verändert. Aufgrund der Charakteristik eines passiven Dämpfers wird bei zueinander entgegengesetzten Vorzeichen von Dämpfergeschwindigkeit und erforderlicher Dämpfkraft nur die am wenigsten schädliche Dämpfkraft eingestellt, die kleinst mögliche Dämpfung.

Die Parameter des Skyhook-Reglers, insbesondere der Proportionalbeiwert, mit dem die Aufbaugeschwindigkeit bewertet wird, oder allgemeiner: die Parameter eines Kennfeldes, mit dem die Aufbaugeschwindigkeit bewertet wird, werden üblicherweise hinsichtlich einer geringen Aufbauanregung, geringen Radlastschwankungen und weiterer subjektiven Kriterien, wie z. B. das Fahrzeughandling anhand der Beurteilung vieler Fahrmanöver optimiert und fest eingestellt. Bei einer festen Einstellung muss immer ein Kompromiss erfolgen zwischen dem Fahrkomfort und den Fahrzeughandling-Eigenschaften. Einen wesentlichen Qualitätsgewinn erhält man, wenn das Regelsystem bestimmte Fahrmanöver erkennt, in denen nicht die Grundabstimmung der Dämpfer verwendet wird sondern - entsprechend dem bestimmten Fahrmanöver angepasst - gezielt die optimale Dämpfung gestellt wird. In der Literatur wird dies z. B. über die Veränderung des Proportionalbeiwertes der Aufbaugeschwindigkeit getan.

Der Skyhook-Regler hat den Nachteil, dass in Abhängigkeit der Dämpfergeschwindigkeit die Dämpfkraft ständig zwischen hart und weich umgeschaltet wird. Dieses kann z. B. zu unerwünschten Akustikproblemen führen. Ein weiterer Nachteil des Skyhook-Reglers besteht darin, dass bei fehlender Aufbaugeschwindigkeit der Dämpfer automatisch auf "weich" eingestellt wird. Dies kann z. B. bei hohen Fahrzeuggeschwindigkeiten oder Brems- und/oder Lenkmanövern zu unerwünschten Aufbaubewegungen und damit zu einer Verschlechterung des Fahrkomforts führen.

Der Erfindung liegt die Aufgabe zugrunde, die Ansteuerung eines nach einem Standardregelverfahren insbesondere dem Skyhook-Verfahren verstellbaren Dämpfers so weiterzubilden, dass in den oben genannten Fahrsituationen unerwünscht auftretende Aufbaubewegungen möglichst frühzeitig zumindest weitgehend unterdrückt werden.

Gemäß Anspruch 1 erfolgt dies nicht nur durch eine Einschränkbarkeit der Regelung in der Weise, dass der Maximalwert der Stellgröße in besonderen, zuvor definierten Fahrsituationen verringert und der Minimalwert der Stellgroße vergrößert wird, sondern gemäß Anspruch 1 wird sowohl eine Verengung als auch eine Aufweitung des Stellbereichs erfasst. Damit ist dem Umstand Rechnung getragen, dass in Fahrsituationen, in denen die Aufbaugeschwindigkeit Null ist, die Dämpfer des Kraftfahrzeuges auf weich eingestellt sind (und somit ein Stellbereich von der Breite Null eingestellt ist) und ausgehend von dieser Fahrsituation der Stellbereich aufgeweitet wird, wenn sich aufgrund der Fahrsituation eine Aufbaubeschleunigung andeutet. Darüber hinaus besteht gemäß Anspruch 1 die Möglichkeit, dass ein weiter Stellbereich verkleinert wird.

Der Grundgedanke der Erfindung ist demnach darin zu sehen, dass der Stellbereich des Dämpfers an die konkrete Fahrsituation angepasst wird, und zwar *bereits dann, wenn sich diese ankündigt* (z. B. bei Betätigung des Brempedals).

Über eine solche Veränderbarkeit des Stellbereichs des Skyhook-Algorithmus in Abhängigkeit von diesen Signalen werden die Dämpfkräfte, die vom Skyhook-Algorithmus in Abhängigkeit von Aufbau- und Dämpfergeschwindigkeit erzeugt werden, innerhalb der technischen Möglichkeiten des jeweiligen Dämpfers für die Dauer der kritischen Fahrsituation hinsichtlich einer möglichen Weichstellung oder einer möglichen Hartstellung verändert.

Gemäß bevorzugter Ausführungsformen ist die Veränderbarkeit des Maximal- bzw. Minimalwertes an fahrdynamische Größen gekoppelt.

D. h.: Eine Veränderung des Regelbereichs kann an gewisse, vorgegebene Fahrzeug-Messgrößen gekoppelt werden.

Signale, die eine Änderung der Fahrzeug-Längsverzögerung ankündigen oder anzeigen sind z. B.: Änderung des Bremsdrucks, Änderung des Bremslichtsignals, Fahrerwunschmoment, Motorantriebsmoment oder Gaspedalstellung.

Signale, die eine Änderung der Fahrzeug-Querbeschleunigung ankündigen oder anzeigen sind z. B.: Änderung der gemessenen Querbeschleunigung oder die aus Lenkwinkel und Fahrzeuggeschwindigkeit berechnete Querbeschleunigung.

Bei Feststellung eines Handlungsbedarfs durch die an die entsprechenden Sensoren angeschlossene Steuer/Regel-Elektronik kann die Stellgröße in Richtung Dämpferhart- bzw. Dämpferweichstellung je nach Gewichtigkeit auch graduell oder zeitverzögert, d. h. nicht abrupt, eingestellt werden.

Mit Hilfe der erfindungsgemäßen Einschränkung des Stellbereichs ergibt sich eine deutlich verbesserte Bedämpfung von Aufbauschwingungen insbesondere bei Beschleunigungsvorgängen in Längs- und Querrichtung.

Im folgenden werden Aufbau und Wirkungsweise der erfindungsgemäßen Vorrichtung anhand eines Ausführungsbeispiels näher erläutert.

Dabei erschließt sich dem Fachmann das erfindungsgemäße Verfahren aus der Wirkungsweise der Vorrichtung. Es zeigt:

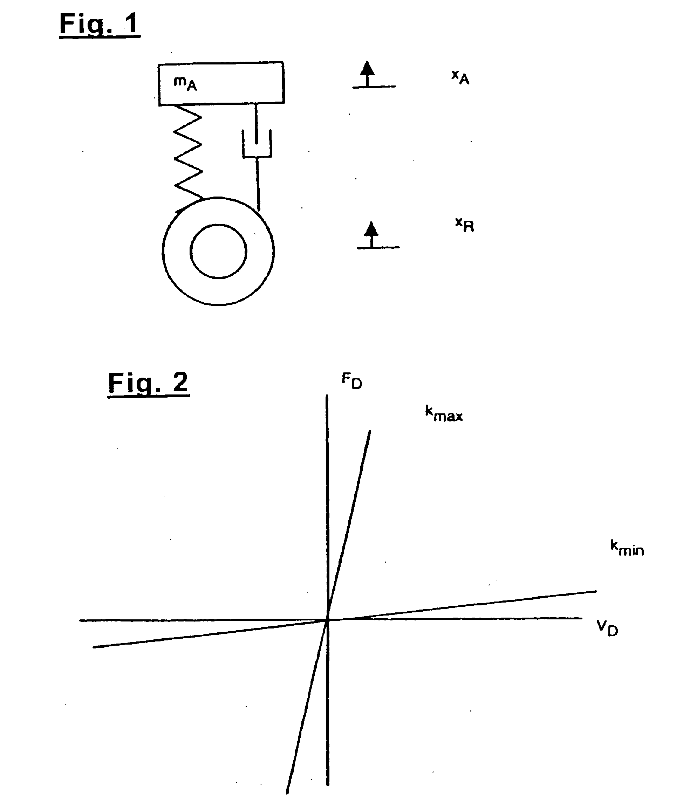

>Fig. 1 den Prinzipaufbau einer Radaufhängung,
>Fig. 2 ein Kraft/Geschwindigkeits-Diagramm,
>Fig. 3 ein Blockschaltbild der erfindungsgemäßen Dämpfer-Verstellung,
>Fig. 4 ein Dämpferkraft-Diagramm gemäß dem Stand der Technik und
>Fig. 5 ein Dämpferkraft-Diagramm gemäß der Erfindung.

Die Grundidee des Skyhook-Verfahrens besteht in der Annahme, dass der Fahrzeugaufbau gegenüber einem fahrzeugunabhängigen Bezugspunkt ("Himmelshaken") gedämpft wird. Daraus resultiert eine idealisierte Dämpfkraft von

$$F_{Sky} = v_A * k_{Sky}$$

mit $F_{Sky}$ = Skyhook-Dämpfkraft, $v_A$ = Aufbaugeschwindigkeit und $k_{Sky}$ = Dämpfungskoeffizient.

Dies ist so nicht realisierbar, da zum einen ein solcher unabhängiger Bezugspunkt nicht gegeben ist und zum anderen der Dämpfer bei der großen Mehrzahl der Fahrzeuge mit Rad und Aufbau verbunden ist und somit nur die relative Geschwindigkeit von Rad zu Aufbau beeinflussen kann. Bei semiaktiven Dämpfern kann die Dämpfkraft über den Dämpfungskoeffizienten zwischen $k_{min}$ und $k_{max}$ verstellt werden, z. B. elektrisch oder pneumatisch. Die Dämpfkraft resultiert aus der Dämpfergeschwindigkeit und dem eingestellten Dämpfungskoeffizienten (s. Kennfeld). Die praktische Umsetzung des Skyhook-Verfahrens sieht meistens so aus, dass, wenn

$$F_{Sky} \text{ und } v_D = dx_A/dt - dx_R/dt$$

dasselbe Vorzeichen besitzen, die ideale Skyhook-Kraft gestellt wird:

$$F_D = v_A * k_{Sky}$$

und wenn

$$F_{Sky} \text{ und } v_D = dx_A/dt - dx_R/dt$$

nicht dasselbe Vorzeichen besitzen, diejenige Dämpfkraft gestellt wird, die dem Skyhook-Ansatz möglichst nahe kommt:

$$F_D = v_A * k_{min} .$$

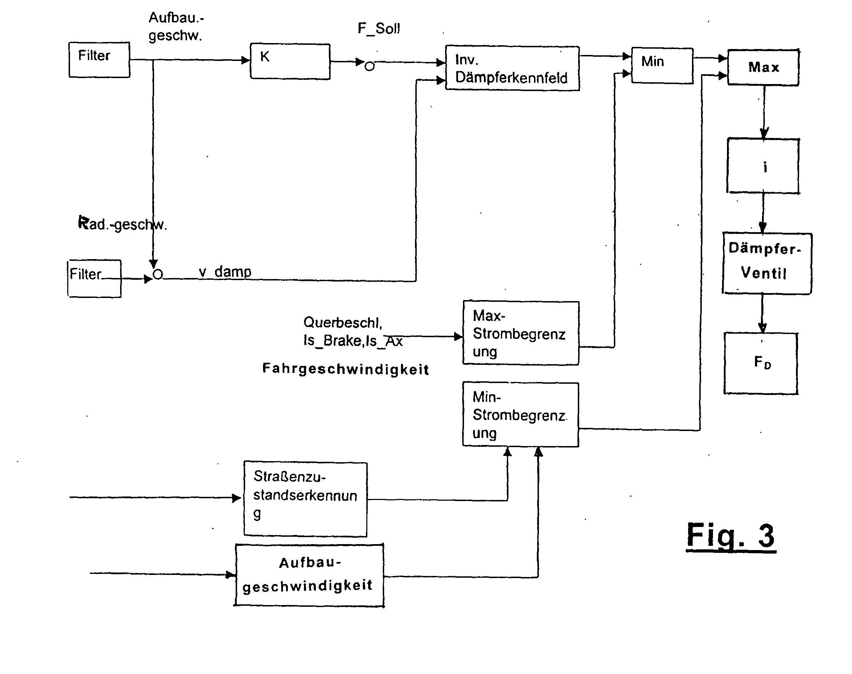

Das in Fig. 3 dargestellte Blockschaltbild zeigt ein Ausführungsbeispiel der erfindungsgemäßen Dämpfer-Elektronik- Eingangsseitig sind an die Schaltung die für die Bestimmung der Längs- und Querbeschleunigung und für die Bestimmung der Straßenunebenheiten erforderlichen Sensoren (nicht dargestellt) angebracht. Die von den Sensoren gelieferten Daten (Ist-Werte) werden mit vorgegebenen Sollwerten verglichen. Übersteigt der IstWert den vorgegebenen Sollwert, so wird - wegen eines inversen Dämpferkennfeldes - der Strom zur Betätigung eines auf den Dämpfer wirkenden elektronischen Ventils reduziert, wodurch sich die Dämpfercharakteristik in Richtung "hart" verschiebt.

Anders hingegen wirkt die Dämpferkraft-Verstellung bezüglich des für die Straßenzustands-Erkennung zuständigen Sensors. Übersteigen die sensierten Straßenunebenheiten einen vorgegebenen Grenzwert, so wird ein graduell verstärkter oder sogar maximaler Strom i auf das elektromagnetische Ventil gegeben, was einer Zurücknahme der Dämpferkraft $F_D$ bedeutet.

Auf die Sensoren zur Bestimmung der Beschleunigung usw. wird hier nicht näher eingegangen, da sie nicht Gegenstand der vorliegenden Erfindung sind. Ebenfalls wird nicht näher auf die Stellglieder zur Beeinflussung der Dämpfung eingegangen. Dabei kann es sich um elektromagnetisch betätigte Ventile handeln oder es kann Pneumatik zum Einsatz gelangen. Erfindungswesentlich ist die Beeinflussung der Dämpferwirkung in Abhängigkeit von der jeweiligen Fahrsituation mit Hilfe eines erfindungsgemäßen Steuerungs/Regelungs-Verfahrens bzw. einer erfindungsgemäßen, zur Durchführung des Verfahrens vorgesehenen Steuerungs/Regelungs-Vorrichtung.

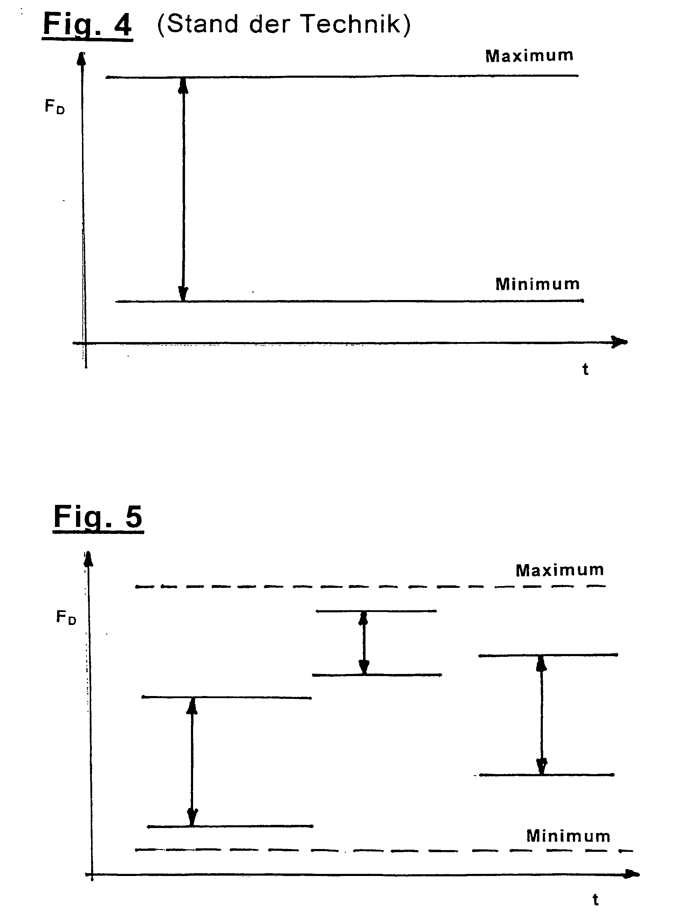

Aus dem in Fig. 4 dargestellten Diagramm geht hervor, dass gemäß dem Stand der Technik stets zwischen den technisch möglichen Grenzwerten (d. h. Minimum und Maximum) der Dämpferkraft hin und her geschaltet wird.

Erfindungsgemäß kann sowohl der obere als auch der untere Grenzwert verändert werden (Fig. 5). Damit ergibt sich nicht nur eine Veränderbarkeit der Regelspanne, sondern auch der jeweilige absolute Betrag der Dämpferkraft kann eingestellt werden.

Der Grundzustand ist mit der minimalen Dämpfung (weich) gegeben.

Bei bestimmten Fahrsituationen wird der Stellbereich der Dämpfung aufgeweitet. Dies kann bereits in Abhängigkeit von der Fahrzeuggeschwindigkeit, z. B. für einen Geschwindigkeitsbereich von 60 bis 130 km/h, vorzugsweise 90 bis 110 km/h, geschehen. Erfindungswesentlich ist in jedem Fall die Veränderbarkeit des Dämpferkraft-Stellbereichs.

**Patentansprüche**

1.  Verfahren zur Steuerung oder Regelung der Dämpfkraft für einen oder mehrere Schwingungsdämpfer einer Fahrzeugradaufhängung

    - mit einer Dämpfungskrafteinrichtung, die auf mindestens ein Eingangssignal hin die Dämpfungskraftcharakteristik des Dämpfers diskret oder kontinuierlich innerhalb der Grenzen eines Stellbereiches für die Dämpfungskraft des Dämpfers einstellt,
    - wobei ein Signal erfasst wird, welches die vertikale Geschwindigkeit an einem Teil der Fahrzeugkarosserie als gefederte Masse repräsentiert,
    - und ein weiteres Signal erfasst wird, welches die vertikale Radgeschwindigkeit der ungefederten Radmasse repräsentiert,
    - und darauf basierend ein Steuersignal zur Verstellung der Dämpfercharakteristik innerhalb des Stellbereichs nach einem Standardregelverfahren berechnet wird,

    **dadurch gekennzeichnet,**
    **dass** in bestimmten Fahrsituationen der Stellbereich verändert wird, indem die obere Grenze des Stellbereiches angehoben oder abgesenkt wird und/oder die untere Grenze des Stellbereichs angehoben oder abgesenkt wird.

2.  Verfahren nach Anspruch 1,
    **dadurch gekennzeichnet,**
    **dass** eine Dämpferweichstellung in Abhängigkeit von Signalen, die eine Änderung der Fahrzeug-Längsverzögerung ankündigen oder anzeigen, eingeschränkt wird.

3.  Verfahren nach Anspruch 1 oder 2,
    **dadurch gekennzeichnet,**
    **dass** eine Dämpferweichstellung in Abhängigkeit von Signalen, die eine Änderung der Fahrzeugquerbeschleunigung ankündigen oder anzeigen, eingeschränkt wird.

4.  Verfahren nach einem der Ansprüche 1 bis 3,
    **dadurch gekennzeichnet,**
    **dass** eine Dämpferhartstellung eingeschränkt wird, wenn über adaptive Algorithmen oder selbstlernende Verfahren eine Fahrbahn mit großen Unebenheiten erkannt wird.

5.  Verfahren nach einem der Ansprüche 1 bis 4,
    **dadurch gekennzeichnet,**
    **dass** eine Dämpferhartstellung in Abhängigkeit von der Aufbaugeschwindigkeit zugelassen wird, wobei bei großen Aufbaugeschwindigkeiten der Stellbereich in Richtung Dämpferverhärtung erweitert wird und bei kleinen Aufbaugeschwindigkeiten der Stellbereich in Richtung Dämpferverhärtung eingeschränkt wird.

6.  Verfahren nach einem der Ansprüche 1 bis 5
    **dadurch gekennzeichnet,**
    **dass** eine Einschränkung des Stellbereichs in Richtung Dämpferverhärtung immer Priorität gegenüber der Einschränkung in Richtung Dämpferweichstellung hat.

7.  Verfahren nach einem der Ansprüche 1 bis 6,
    **dadurch gekennzeichnet,**
    **dass**, wenn im Steuer-Regelalgorithmus Fehler festgestellt werden, die Stellgröße - je nach Schwere des Fehlers - in Richtung der Dämpferweichstellung stufig eingeschränkt wird.

8.  Verfahren nach einem der Ansprüche 1 bis 7,
    **dadurch gekennzeichnet,**
    **dass** der Stellbereich des Dämpfers an die jeweils konkrete Fahrsituation angepasst wird.

9.  Verfahren nach Anspruch 8,
    **dadurch gekennzeichnet,**
    **dass** die Anpassung des Stellbereichs des Dämpfers immer dann erfolgt, wenn sich die jeweilige konkrete Fahrsituation ankündigt.

10. Verfahren nach einem der Ansprüche 1 bis 9,
    **dadurch gekennzeichnet,**
    **dass** das Standardregelverfahren das Skyhook-Verfahren ist.

11. Vorrichtung zur Durchführung des Verfahrens nach Anspruch 1, für einen oder mehrere Schwingungsdämpfer einer Fahrzeugradaufhängung

    - mit einer Dämpfungskrafteinrichtung zur diskreten oder kontinuierlichen Einstellung der Dämpfercharakteristik des Dämpfers innerhalb der Grenzen eines Stellbereiches für die Dämpfungskraft des Dämpfers auf mindestens ein Eingangssteuersignal hin,

- wobei ein Signal erfassbar ist, welches die vertikale Geschwindigkeit an einem Teil der Fahrzeugkarosserie als gefederte Masse repräsentiert,

- und ein weiteres Signal erfassbar ist, welches die vertikale Radgeschwindigkeit der ungefederten Radmasse repräsentiert,

- und darauf basierend ein Steuersignal zur Verstellung der Dämpfercharakteristik innerhalb des Stellbereiches nach einem Standardregelverfahren berechenbar ist,

**gekennzeichnet durch**
Mittel zur Veränderung des Stellbereiches in bestimmten Fahrsituationen des Kraftfahrzeuges, womit die obere Grenze des Stellbereiches anhebbar oder absenkbar ist und/oder die untere Grenze des Stellbereiches anhebbar oder absenkbar ist.

**12.** Vorrichtung nach Anspruch 11,
**gekennzeichnet durch**
Mittel zur Einschränkung einer Dämpferweichstellung in Abhängigkeit von Signalen, die eine Änderung der Fahrzeug-Längsverzögerung ankündigen oder anzeigen.

**13.** Vorrichtung nach Anspruch 11 oder 12,
**gekennzeichnet durch**
Mittel zur Einschränkung einer Dämpferweichstellung in Abhängigkeit von Signalen, die eine Änderung der Fahrzeugquerbeschleunigung ankündigen oder anzeigen.

**14.** Vorrichtung nach einem der Ansprüche 11 bis 13,
**gekennzeichnet durch**
Mittel zur Einschränkung einer Dämpferhartstellung bei Erkennen großer Fahrbahn-Unebenheiten mittels adaptiver Algorithmus-Schaltungen oder selbstlernender Einrichtungen.

**15.** Vorrichtung nach einem der Anspruche 11 bis 14,
**gekennzeichnet durch**
Mittel zur Dämpferhartstellung in Abhängigkeit von der Aufbaugeschwindigkeit,
wobei bei großen Aufbaugeschwindigkeiten eine Erweiterung des Stellbereichs in Richtung Dämpferverhärtung
und wobei kleinen Aufbaugeschwindigkeiten eine Einschränkung des Stellbereichs in Richtung Dämpferverhärtung realisierbar ist.

**16.** Vorrichtung nach einem der Ansprüche 11 bis 15,
**gekennzeichnet durch**
Mittel zur Einschränkung des Stellbereichs in Richtung Dämpferverhärtung, wobei immer Priorität gegenüber der Einschränkung in Richtung Dämpferweichstellung besteht.

**17.** Vorrichtung nach einem der Ansprüche 11 bis 16,
**gekennzeichnet durch**
Mittel zur stufigen Einschränkung der Stellgröße in Richtung der Dämpferweichstellung bei Feststellung von Fehlern im Steuer-Regelalgorithmus.

**18.** Vorrichtung nach einem der Ansprüche 11 bis 17,
**gekennzeichnet durch**
Mittel zur Anpassung des Stellbereichs an die sich jeweils ankündigende, konkrete Fahrsituation.

**Claims**

**1.** Method for controlling or regulating the damping force for one or more vibration dampers of a vehicle wheel suspension

- with a damping-force device which, in response to at least one input signal, sets the damping-force characteristic of the damper discretely or continuously within the limits of an adjusting range for the damping force of the damper,
- a signal being detected which represents the vertical speed on a part of the vehicle body as a sprung mass,
- and a further signal being detected which represents the vertical wheel speed of the unsprung wheel mass,
- and, based on this, a control signal for adjusting the damper characteristic within the adjusting range being calculated according to a standard control method,

**characterized**
**in that**, in specific driving situations, the adjusting range is varied in that the upper limit of the adjusting range is raised or lowered and/or the lower limit of the adjusting range is raised or lowered.

**2.** Method according to Claim 1, **characterized in that** a damper soft setting is restricted as a function of signals which announce or indicate a change in the vehicle longitudinal deceleration.

**3.** Method according to Claim 1 or 2, **characterized in that** a damper soft setting is restricted as a function of signals which announce or indicate a change in the vehicle transfer acceleration.

**4.** Method according to one of Claims 1 to 3, **characterized in that** a damper hard setting is restricted when a road having major unevennesses is detected via adaptive algorithms or self-learning methods.

**5.** Method according to one of Claims 1 to 4, **characterized in that** a damper hard setting is permitted as a function of the body speed, the adjusting range being widened in the direction of damper hardening in the case of high body speeds, and the adjusting range being restricted in the direction of damper hardening in the case of low body speeds.

**6.** Method according to one of Claims 1 to 5, **characterized in that** a restriction of the adjusting range in the direction of damper hardening always has priority over the restriction in the direction of a damper soft setting.

**7.** Method according to one of Claims 1 to 6, **characterized in that**, when errors are found in the control/regulating algorithm, the adjusting variable is restricted in steps in the direction of the damper soft setting according to the seriousness of the error.

**8.** Method according to one of Claims 1 to 7, **characterized in that** the adjusting range of the damper is adapted to the in each case actual driving situation.

**9.** Method according to Claim 8, **characterized in that** the adaptation of the adjusting range of the damper always takes place whenever the respective actual driving situation is announced.

**10.** Method according to one of Claims 1 to 9, **characterized in that** the standard control method is the skyhook method.

**11.** Apparatus for carrying out the method according to Claim 1 for one or more vibration dampers of a vehicle wheel suspension

> - with a damping-force device for the discrete or continuous setting of the damper characteristic of the damper within the limits of an adjusting range for the damping force of the damper in response to at least one input control signal,
> - a signal being detectable which represents the vertical speed on a part of the vehicle body as a sprung mass,
> - and a further signal being detectable which represents the vertical wheel speed of the unsprung wheel mass,
> - and, based on this, a control signal for adjusting the damper characteristic within the adjusting range being calculable according to a standard control method,

**characterized by**
means for varying the adjusting range in specific driving situations of the motor vehicle, whereby the upper limit of the adjusting range can be raised or lowered and/or the lower limit of the adjusting range can be raised or lowered.

**12.** Apparatus according to Claim 11, **characterized by** means for restricting a damper soft setting as a function of signals which announce or indicate a change in the vehicle longitudinal deceleration.

**13.** Apparatus according to Claim 11 or 12, **characterized by** means for restricting a damper soft setting as a function of signals which announce or indicate a change in the vehicle transfer acceleration.

**14.** Apparatus according to one of Claims 11 to 13, **characterized by** means for restricting a damper hard setting in the event of the detection of major road unevennesses by means of adaptive algorithm circuits or self-learning devices.

**15.** Apparatus according to one of Claims 11 to 14, **characterized by** means for damper hard setting as a function of the body speed, a widening of the adjusting range in the direction of damper hardening being implementable in the case of high body speeds, and a restriction of the adjusting range in the direction of damper hardening being implementable in the case of low body speeds.

**16.** Apparatus according to one of Claims 11 to 15, **characterized by** means for restricting the adjusting range in the direction of damper hardening, this always having priority over the restriction in the direction of a damper soft setting.

**17.** Apparatus according to one of Claims 11 to 16, **characterized by** means for the stepped restriction of the adjusting variable in the direction of the damper soft setting when errors are found in the control/regulating algorithm.

**18.** Apparatus according to one of Claims 11 to 17, **characterized by** means for adapting the adjusting range to the actual driving situation which is in each case announced.

**Revendications**

**1.** Procédé de commande ou de régulation de la force d'amortissement d'un ou plusieurs amortisseurs d'une suspension présentant un dispositif de force d'amortissement qui établit à partir d'au moins un signal d'entrée la caractéristique de force d'amortissement de l'amortisseur de manière discontinue ou continue à l'intérieur des limites d'une plage de réglage de la force d'amortissement de l'amortisseur, dans lequel :

> un signal qui représente la vitesse verticale d'une partie du châssis du véhicule comme masse amortie étant détecté,

un autre signal qui représente la vitesse verticale de la masse non amortie de la roue est détecté,

sur cette base, un signal de commande qui ajuste la caractéristique d'amortissement à l'intérieur de la plage de réglage est calculé selon un procédé de régulation standard,

**caractérisé en ce que**

dans certaines situations de conduite, la plage de réglage est modifiée en relevant ou abaissant la limite supérieure de la plage de réglage et/ou en relevant ou abaissant la limite inférieure de la plage de réglage.

2. Procédé selon la revendication 1, **caractérisé en ce qu'**un réglage mou de l'amortisseur est restreint en fonction de signaux qui annoncent ou indiquent une modification du ralentissement longitudinal du véhicule.

3. Procédé selon les revendications 1 ou 2, **caractérisé en ce que** le réglage mou de l'amortisseur est limité en fonction de signaux qui annoncent ou indiquent une modification de l'accélération transversale du véhicule.

4. Procédé selon l'une des revendications 1 à 3, **caractérisé en ce qu'**un réglage dur de l'amortisseur est réglé si une chaussée à importantes irrégularités est détectée par des algorithmes adaptatifs ou des procédés à auto-apprentissage.

5. Procédé selon l'une des revendications 1 à 4, **caractérisé en ce que** le réglage dur de l'amortisseur est admis en fonction de la vitesse du châssis, **en ce que** lorsque la vitesse du châssis est élevée, la plage de réglage est agrandie en direction du durcissement de l'amortisseur et **en ce que** lorsque la vitesse du châssis est basse, la plage de réglage est limitée en direction d'un durcissement de l'amortisseur.

6. Procédé selon l'une des revendications 1 à 5, **caractérisé en ce qu'**une restriction de la plage de réglage en direction du durcissement de l'amortisseur a toujours priorité sur une restriction en direction d'un amollissement de l'amortisseur.

7. Procédé selon l'une des revendications 1 à 6, **caractérisé en ce que** si des erreurs sont constatées par un algorithme de commande de réglage, la grandeur de réglage est limitée par étapes en direction d'un amollissement de l'amortisseur, en fonction de la gravité de l'erreur.

8. Procédé selon l'une des revendications 1 à 7, **caractérisé en ce que** la plage de réglage de l'amortisseur est adaptée à chaque situation concrète de conduite.

9. Procédé selon la revendication 8, **caractérisé en ce que** l'adaptation de la plage de réglage de l'amortisseur a toujours lieu lorsque chaque situation de conduite concrète est annoncée.

10. Procédé selon l'une des revendications 1 à 9, **caractérisé en ce que** le procédé de régulation standard est un procédé dit "Skyhook".

11. Dispositif en vue de l'exécution du procédé selon la revendication 1, pour un ou plusieurs amortisseurs d'une suspension des roues d'un véhicule, qui présente un dispositif de force d'amortissement qui règle de manière discontinue ou continue la caractéristique d'amortissement de l'amortisseur à l'intérieur des limites d'une plage de réglage de la force d'amortissement de l'amortisseur, sur au moins un signal de commande d'entrée, un signal qui représente la vitesse verticale d'une partie de la carrosserie du véhicule en tant que masse amortie pouvant être détecté, un autre signal qui représente la vitesse verticale de la masse de la roue non amortie pouvant être détecté et sur la base de ces signaux, un signal de commande qui règle la caractéristique d'amortissement à l'intérieur de la plage de réglage pouvant être calculé selon un procédé de régulation standard, **caractérisé par** des moyens de modification de la plage de réglage dans certaines situations de conduite du véhicule automobile, la limite supérieure de la plage de réglage pouvant être relevée ou abaissée et/ou la limite inférieure de la plage de réglage pouvant être relevée ou abaissée.

12. Dispositif selon la revendication 11, **caractérisé par** des moyens qui limitent le réglage mou de l'amortisseur en fonction de signaux qui annoncent ou indiquent une modification du ralentissement longitudinal du véhicule.

13. Dispositif selon l'une des revendications 11 ou 12, **caractérisé par** des moyens qui limitent le réglage mou de l'amortisseur en fonction de signaux qui annoncent ou indiquent une modification de l'accélération transversale du véhicule.

14. Dispositif selon l'une des revendications 11 à 13, **caractérisé par** des moyens qui limitent le réglage dur de l'amortisseur lorsque des irrégularités assez importantes de la chaussée sont détectées au moyen de circuits à algorithme adaptatif ou de dispositifs à auto-apprentissage.

**15.** Dispositif selon l'une des revendications 11 à 14, **caractérisé par** les moyens de réglage dur de l'amortisseur en fonction de la vitesse du châssis, un agrandissement de la plage de réglage en direction du durcissement de l'amortissement pouvant être réalisé lorsque la vitesse du châssis est élevée et une limitation de la plage de réglage en direction d'un durcissement de l'amortissement pouvant être réalisée lorsque la vitesse du châssis est basse.

**16.** Dispositif selon l'une des revendications 11 à 15, **caractérisé par** des moyens de limitation de la plage de réglage en direction du durcissement de l'amortissement, la priorité étant toujours par rapport à la limitation en direction du réglage mou de l'amortisseur.

**17.** Dispositif selon l'une des revendications 11 à 16, **caractérisé par** des moyens de limitation par gradins de la grandeur de réglage en direction du réglage mou de l'amortisseur lorsque des erreurs sont constatées dans l'algorithme de commande de régulation.

**18.** Dispositif selon l'une des revendications 11 à 17, **caractérisé par** des moyens d'adaptation de la plage de réglage à chaque situation concrète de conduite qui s'annonce.

## Fig. 1

$m_A$

$x_A$

$x_R$

## Fig. 2

$F_D$

$k_{max}$

$k_{min}$

$v_D$

Aufbau.-geschw.

F_Soll

Filter

K

Inv. Dämpferkennfeld

Min

Max

i

Dämpfer-Ventil

$F_D$

Rad.-geschw.

Filter

v_damp

Querbeschl, Is_Brake, Is_Ax

Max-Strombegrenzung

Fahrgeschwindigkeit

Min-Strombegrenzung

Straßenzustandserkennung

Aufbau-geschwindigkeit

**Fig. 3**

EP 1 253 030 B1

**Fig. 4**  (Stand der Technik)

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4135526 A